# EUROPEAN PATENT APPLICATION

(11) **EP 3 421 539 A1**
(43) Date of publication of application: **02.01.2019**
(21) Application number: 17756359.0
(22) Date of filing: 17.02.2017
(51) Int. Cl.: C08L 27/12, C08L 71/10, C08L 83/04

(54) **FLUORORUBBER COMPOSITION AND MOLDED ARTICLE**

(30) Priority: 24.02.2016 JP 2016033336
(71) Applicant: Daikin Industries, Ltd., Osaka-shi, Osaka 530-8323 (JP)
(72) Inventor: KITAICHI, Masanori, Osaka-Shi Osaka 530-8323 (JP); KITAGAWA, Michiko, Osaka-Shi Osaka 530-8323 (JP); SAKAMOTO, Yasuhiro, Osaka-Shi Osaka 530-8323 (JP); UEHATA, Hidekazu, Osaka-Shi Osaka 530-8323 (JP); NAKAMAE, Yasushi, Osaka-Shi Osaka 530-8323 (JP); KAWASAKI, Kazuyoshi, Osaka-Shi Osaka 530-8323 (JP)
(74) Representative: Hoffmann Eitle
(86) International application number: PCT/JP2017/005817
(87) International publication number: WO 2017/145920

(57) **Abstract**

Provided is a fluororubber composition that can provide a molded article having excellent sticking resistance. The invention relates to a fluororubber composition including a fluororubber, a silicone rubber, and perfluoropolyether. The fluororubber composition contains the silicone rubber in an amount of 5 to 55 parts by mass relative to 100 parts by mass of the fluororubber and the perfluoropolyether in an amount of 0.5 to 10 parts by mass relative to 100 parts by mass of the fluororubber.

## Description

### TECHNICAL FIELD

The invention relates to fluororubber compositions and molded articles.

### BACKGROUND ART

Fluororubbers have excellent properties such as heat resistance, oil resistance, and chemical resistance, but are not excellent in low-temperature properties. A known technique for improvement of low-temperature properties is blending of a fluororubber with a silicone rubber as disclosed in Non-Patent Literature 1.

### CITATION LIST

### - Non-Patent Literature

Non-Patent Literature 1: Takaomi Satokawa, Fluororesin Handbook ("Fusso Jushi Handbook"), The Nikkan Kogyo Shimbun, Ltd., 1990, p. 592

### SUMMARY OF INVENTION

### - Technical Problem

However, molded articles produced from a composition containing a fluororubber and a silicone rubber may stick to each other, which may lead to molding failure. In addition, when molded articles produced are stacked or closely placed with no space therebetween for storage, they problematically stick to each other. Thus, careful attention must be paid to prevent sticking of molded articles at the time of the production, and a large space is required for storage of molded articles.

The invention aims to solve the above problems which have never been studied so far and provide a fluororubber composition that can provide a molded article having excellent sticking resistance.

### - Solution to Problem

The inventors found that addition of extremely limited amounts of a silicone rubber and perfluoropolyether to a fluororubber admirably solves the above problems, leading to completion of the invention.

That is, the invention relates to a fluororubber composition including:
a fluororubber;
a silicone rubber; and
perfluoropolyether,
the fluororubber composition containing the silicone rubber in an amount of 5 to 55 parts by mass relative to 100 parts by mass of the fluororubber and the perfluoropolyether in an amount of 0.5 to 10 parts by mass relative to 100 parts by mass of the fluororubber.

The fluororubber composition preferably further includes a cross-linker.

The fluororubber composition preferably further includes a filler.

The invention also relates to a molded article formed from the fluororubber composition.

### - Advantageous Effects of Invention

The fluororubber composition of the invention having the above structure can provide a molded article having excellent sticking resistance. When a thin film is produced from a conventional fluororubber composition and the film is folded so that one part thereof is stacked on another part during the production, these parts stick to each other and cannot be separated from each other, which may lead to product failure. In contrast, the use of the fluororubber composition of the invention is less likely to cause product failure. In addition, molded articles produced from the fluororubber composition of the invention do not stick to each other even when they are closely placed with no space therebetween or stacked. Such molded articles can therefore be easily stored.

The molded article of the invention having the above structure has excellent sticking resistance. Therefore, they are easily produced and stored.

### DESCRIPTION OF EMBODIMENTS

The invention will be specifically described hereinbelow.

The fluororubber composition of the invention contains a fluororubber, a silicone rubber, and perfluoropolyether. The fluororubber composition of the invention is particularly characterized in that it contains the silicone rubber in an amount of 5 to 55 parts by mass relative to 100 parts by mass of the fluororubber and the perfluoropolyether in an amount of 0.5 to 10 parts by mass relative to 100 parts by mass of the fluororubber. Owing to these features, a molded article having excellent sticking resistance can be obtained.

The amount of the silicone rubber is preferably 8 parts by mass or more, more preferably 13 parts by mass or more, still more preferably 18 parts by mass or more, and is preferably 52 parts by mass or less, more preferably 47 parts by mass or less, still more preferably 42 parts by mass or less. If the amount of the silicone rubber is too large, a molded article having excellent sticking resistance cannot be obtained. Also if the amount of the silicone rubber is too small, a molded article having excellent sticking resistance cannot be obtained.

The amount of the perfluoropolyether is preferably 0.8 parts by mass or more, more preferably 1.3 parts by mass or more, still more preferably 1.8 parts by mass or more, and is preferably 8.0 parts by mass or less, more preferably 6.0 parts by mass or less. If the amount of the perfluoropolyether is too large, it may be difficult to produce the composition or the molded article. If the amount of the perfluoropolyether is too small, a molded article having excellent sticking resistance cannot be obtained.

The fluororubber may be a partially fluorinated rubber or a perfluororubber.

Examples of the partially fluorinated rubber include vinylidene fluoride (VdF)-based fluororubbers, tetrafluoroethylene (TFE)/propylene (Pr)-based fluororubbers, tetrafluoroethylene (TFE)/propylene/vinylidene fluoride (VdF)-based fluororubbers, ethylene/hexafluoropropylene (HFP)-based fluororubbers, ethylene/hexafluoropropylene (HFP)/vinylidene fluoride (VdF)-based fluororubbers, and ethylene/hexafluoropropylene (HFP)/tetrafluoroethylene (TFE)-based fluororubbers. In particular, the partially fluorinated rubber is preferably at least one selected from the group consisting of vinylidene fluoride-based fluororubbers and tetrafluoroethylene/propylene-based fluororubbers.

The vinylidene fluoride-based fluororubber is preferably a copolymer including 25 to 85 mol% of vinylidene fluoride and 75 to 15 mol% of at least one additional monomer copolymerizable with vinylidene fluoride, more preferably a copolymer including 45 to 80 mol% of vinylidene fluoride and 55 to 20 mol% of at least one additional monomer copolymerizable with vinylidene fluoride.

Examples of the at least one additional monomer copolymerizable with vinylidene fluoride include tetrafluoroethylene (TFE), hexafluoropropylene (HFP), fluoroalkyl vinyl ether, chlorotrifluoroethylene (CTFE), trifluoroethylene, trifluoropropylene, pentafluoropropylene, trifluorobutene, tetrafluoroisobutene, hexafluoroisobutene, vinyl fluoride, fluoromonomers represented by the formula (1) : CH₂=CFRf¹¹ (wherein Rf¹¹ is a C1-C12 linear or branched fluoroalkyl group), fluoromonomers represented by the formula (2) : CH₂=CH-(CF₂)ₙ-X² (wherein X² is H or F, n is an integer of 3 to 10), monomers such as a monomer that provides a cross-linking moiety, and non-fluorinated monomers such as ethylene, propylene, and alkyl vinyl ethers. Each of these may be used alone or in any combination. Preferred among these is at least one selected from the group consisting of TFE, HFP, fluoroalkyl vinyl ethers, CTFE, and 2,3,3,3-tetrafluoropropylene. The fluoroalkyl vinyl ethers are preferably fluoromonomers represented by the formula (3) : CF₂=CF-ORf³¹ (wherein Rf³¹ represents a C1-C10 perfluoroalkyl group) .

The fluororubber may be a copolymer containing a monomer that provides a cross-linking moiety.

Examples of the monomer that provides a cross-linking moiety include compounds represented by the formula (4):

CY¹₂=CY²R_{f}²X³ (4)

(wherein Y¹ and Y² are each a fluorine atom, a hydrogen atom, or -CH₃; R_{f}² is a linear or branched fluorine-containing alkylene group which may optionally contain one or more ether-bond oxygen atoms and an aromatic ring, and in which part or all of the hydrogen atoms is/are replaced by a fluorine atom(s); and X³ is an iodine atom or a bromine atom) . Specific examples thereof include iodine-containing monomers and bromine-containing monomers represented by the formula (5):

CY¹₂=CY²R_{f}³CHR¹-X³ (5)

(wherein Y¹, Y², and X³ are the same as mentioned above; R_{f}³ is a linear or branched fluorine-containing alkylene group which may optionally contain one or more ether-bond oxygen atoms and in which part or all of the hydrogen atoms is/are replaced by a fluorine atom(s) (i.e. a linear or branched fluorine-containing alkylene group in which part or all of the hydrogen atoms is/are replaced by a fluorine atom(s), a linear or branched fluorine-containing oxyalkylene group in which part or all of the hydrogen atoms is/are replaced by a fluorine atom(s), or a linear or branched fluorine-containing polyoxyalkylene group in which part or all of the hydrogen atoms is/are replaced by a fluorine atom(s)); and R¹ is a hydrogen atom or a methyl group), and iodine-containing monomers and bromine-containing monomers represented by the formulas (6) to (23) :

CY⁴₂=CY⁴(CF₂)ₙ-X³ (6)

(wherein Y⁴s are the same as or different from each other and are each a hydrogen atom or a fluorine atom; and n is an integer of 1 to 8),

CF₂=CFCF₂R_{f}⁴-X³ (7)

(wherein
Rf⁴ is 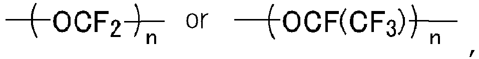 and n is an integer of 0 to 5),

CF₂=CFCF₂(OCF(CF₃)CF₂)ₘ(OCH₂CF₂CF₂)ₙOCH₂CF₂-X³ (8)

(wherein m is an integer of 0 to 5, and n is an integer of 0 to 5),

CF₂=CFCF₂(OCH₂CF₂CF₂)ₘ(OCF(CF₃)CF₂)ₙOCF(CF₃)-X³ (9)

(wherein m is an integer of 0 to 5, and n is an integer of 0 to 5),

CF₂=CF(OCF₂CF(CF₃))ₘO(CF₂)ₙ-X³ (10)

(wherein m is an integer of 0 to 5, and n is an integer of 1 to 8),

CF₂=CF(OCF₂CF(CF₃))ₘ-X³ (11)

(wherein m is an integer of 1 to 5),

CF₂=CFOCF₂(CF(CF₃)OCF₂)ₙCF(-X³)CF₃ (12)

(wherein n is an integer of 1 to 4),

CF₂=CFO(CF₂)ₙOCF(CF₃)-X³ (13)

(wherein n is an integer of 2 to 5)

CF₂=CFO(CF₂)ₙ-(C₆H₄)-X³ (14)

(wherein n is an integer of 1 to 6),

CF₂=CF(OCF₂CF(CF₃))ₙOCF₂CF(CF₃)-X³ (15)

(wherein n is an integer of 1 or 2),

CH₂=CFCF₂O(CF(CF₃)CF₂O)ₙCF(CF₃)-X³ (16)

(wherein n is an integer of 0 to 5),

CF₂=CFO(CF₂CF(CF₃)O)ₘ(CF₂)ₙ-X³ (17)

(wherein m is an integer of 0 to 5, and n is an integer of 1 to 3),

CH₂=CFCF₂OCF(CF₃)OCF(CF₃)-X³ (18)

CH₂=CFCF₂OCH₂CF₂-X³ (19)

CF₂=CFO(CF₂CF(CF₃)O)ₘCF₂CF(CF₃)-X³ (20)

(wherein m is an integer of 0 or greater),

CF₂=CFOCF(CF₃)CF₂O(CF₂)ₙ-X³ (21)

(wherein n is an integer of 1 or greater),
CF₂₌CFOCF₂OCF₂CF(CF₃)OCF₂-X³ (22), and

CH₂=CH-(CF₂)ₙX³ (23)

(wherein n is an integer of 2 to 8). In the formulas (6) to (23), X³ is the same as mentioned above. Each of these may be used alone or in any combination.

Preferred examples of the iodine-containing monomers and bromine-containing monomers represented by the formula (5) include iodine-containing fluorinated vinyl ether represented by the formula (24): 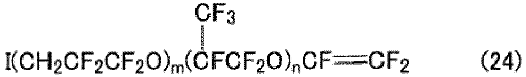 (wherein m is an integer of 1 to 5, and n is an integer of 0 to 3). Specific examples thereof include
ICH₂CF₂CF₂OCF=CF₂, I(CH₂CF₂CF₂O)₂CF=CF₂,
I(CH₂CF₂CF₂O)₃CF=CF₂.

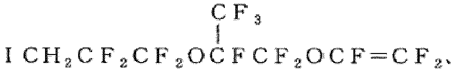

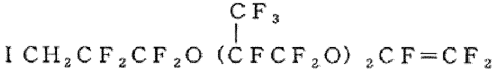

Preferred among these is ICH₂CF₂CF₂OCF=CF₂. Specific preferred examples of the iodine-containing monomers or the bromine-containing monomers represented by the formula (6) include ICF₂CF₂CF=CH₂ and I(CF₂CF₂)₂CF=CH₂. Specific preferred examples of the iodine-containing monomers or the bromine-containing monomers represented by the formula (10) include I(CF₂CF₂)₂OCF=CF₂.

Specific preferred examples of the iodine-containing monomers or the bromine-containing monomers represented by the formula (23) include CH₂=CHCF₂CF₂I and I(CF₂CF₂)₂CH=CH₂.

Also, bisolefin compounds represented by the formula:

R²R³C=CR⁴-Z-CR⁵=CR⁶R⁷

(wherein R², R³, R⁴, R⁵, R⁶, and R⁷ are the same as or different from each other and are each H or a C1-C5 alkyl group; and Z is a linear (straight chain-like) or branched C1-C18 alkylene, cycloalkylene, or (per)fluoropolyoxyalkylene group which may optionally contain an oxygen atom and is preferably at least partially fluorinated) are each preferred as a monomer that provides a cross-linking moiety.

Z is preferably a C4-C12 (per)fluoroalkylene group, and R², R³, R⁴, R⁵, R⁶, and R⁷ are each preferably a hydrogen atom.

When Z is a (per)fluoropolyoxyalkylene group, it is preferably a (per)fluoropolyoxyalkylene group represented by the formula:

-(Q)ₚ-CF₂O-(CF₂CF₂O)ₘ-(CF₂O)ₙ-CF₂-(Q)ₚ-

(wherein Q is a C1-C10 alkylene group or a C2-C10 oxyalkylene group; p is 0 or 1; m and n are integers satisfying an m/n ratio of 0.2 to 5 and allowing the (per) fluoropolyoxyalkylene group to have a molecular weight of 500 to 10000, preferably 1000 to 4000) . In the formula, Q is preferably selected from -CH₂OCH₂- and -CH₂O(CH₂CH₂O)ₛCH₂- (s = 1 to 3).

Preferred examples of the bisolefin compound include CH₂=CH-(CF₂)₄-CH=CH₂, CH₂=CH-(CF₂)₆-CH=CH₂, and those represented by the formula:

CH₂=CH-Z¹-CH=CH₂

(wherein Z¹ is -CH₂OCH₂-CF₂O-(CF₂CF₂O)ₘ-(CF₂O)-CF₂-CH₂OCH₂- (where m/n is 0.5)).

Preferred is 3,3,4,4,5,5,6,6,7,7,8,8-dodecafluoro-1,9-decadiene represented by CH₂=CH-(CF₂)₆-CH=CH₂.

Specific examples of the vinylidene fluoride-based fluororubbers include VdF/HFP-based rubbers, VdF/HFP/TFE-based rubbers, VdF/CTFE-based rubbers, VdF/CTFE/TFE-based rubbers, VdF/(a fluoromonomer represented by the formula (1))-based rubbers, VdF/(a fluoromonomer represented by the formula (1))/TFE-based rubbers, VdF/perfluoro(methyl vinyl ether) (PMVE)-based rubbers, VdF/PMVE/TFE-based rubbers, and VdF/PMVE/TFE/HFP-based rubbers. VdF/CH₂=CFCF₃-based rubbers are preferred as the VdF/(a fluoromonomer represented by the formula (1))-based rubbers, and VdF/TFE/CH₂=CFCF₃-based rubbers are preferred as the VdF/(a fluoromonomer represented by the formula (1))/TFE-based rubbers.

The VdF/CH₂=CFCF₃-based rubber is preferably a copolymer including 40 to 99.5 mol% of VdF and 0.5 to 60 mol% of CH₂=CFCF₃, more preferably a copolymer including 50 to 85 mol% of VdF and 20 to 50 mol% of CH₂=CFCF₃.

The tetrafluoroethylene/propylene-based fluororubber is preferably a copolymer including 45 to 70 mol% of tetrafluoroethylene, 55 to 30 mol% of propylene, and 0 to 5 mol% of a fluoromonomer that provides a cross-linking moiety.

The fluororubber may be a perfluororubber. The perfluororubber is preferably at least one selected from the group consisting of TFE-containing perfluororubbers such as copolymers of TFE/(a fluoromonomer represented by the formula (3) : CF₂=CF-ORf³¹ (wherein Rf³¹ represents a C1-C10 perfluoroalkyl group)); copolymers of TFE/(a fluoromonomer represented by the formula (4) : CF₂=CFOCF₂OR_{f}⁴¹ (wherein Rf⁴¹ is a C1-C6 linear or branched perfluoroalkyl group, a C5-C6 cyclic perfluoroalkyl group, or a C2-C6 linear or branched perfluorooxyalkyl group containing 1 to 3 oxygen atoms)); copolymers of TFE/(a fluoromonomer represented by the formula (5) : CF₂=CFO(CF₂CF(Y)O)ₘ(CF₂)ₙF (wherein Y represents a fluorine atom or a trifluoromethyl group; m is an integer of 1 to 4; and n is an integer of 1 to 4)); and copolymers of TFE/(a fluoromonomer represented by the formula (3), (4), or (5))/(a monomer that provides a cross-linking moiety).

In the case of TFE/PMVE copolymers, the composition is preferably (45 to 90)/(10 to 55) (mol%), more preferably (55 to 80) / (20 to 45), still more preferably (55 to 70) / (30 to 45) .

In the case of copolymers of TFE/PMVE/(a monomer that provides a cross-linking moiety), the composition is preferably (45 to 89.9)/(10 to 54.9)/(0.01 to 4) (mol%), more preferably (55 to 77.9)/(20 to 49.9)/(0.1 to 3.5), still more preferably (55 to 69.8)/(30 to 44.8)/(0.2 to 3).

In the case of copolymers of TFE/(a C4-C12 fluoromonomer represented by the formula (3), (4), or (5)), the composition is preferably (50 to 90) / (10 to 50) (mol%), more preferably (60 to 88) / (12 to 40), still more preferably (65 to 85) / (15 to 35) .

In the case of copolymers of TFE/(a C4-C12 fluoromonomer represented by the formula (3), (4), or (5))/(a monomer that provides a cross-linking moiety), the composition is preferably (50 to 89.9)/(10 to 49.9)/(0.01 to 4) (mol%), more preferably (60 to 87.9)/(12 to 39.9)/(0.1 to 3.5), still more preferably (65 to 84.8)/(15 to 34.8)/(0.2 to 3).

If the copolymers have a composition out of the ranges of these compositions, their properties as a rubber elastomer are impaired, and they tend to have properties similar to resin.

The perfluororubber is preferably at least one selected from the group consisting of copolymers of TFE/ (a fluoromonomer represented by the formula (5))/(a fluoromonomer that provides a cross-linking moiety), copolymers of TFE/(a perfluorovinyl ether represented by the formula (5)), copolymers of TFE/(a fluoromonomer represented by the formula (3)), and copolymers of TFE/(a fluoromonomer represented by the formula (3))/(a monomer that provides a cross-linking moiety).

Also, examples of the perfluororubber include perfluororubbers disclosed in WO 97/24381, JP S61-57324 B, JP H04-81608 B, and JP H05-13961 B.

The monomer composition of the fluororubber may be determined by ¹⁹F-NMR measurement.

For excellent compression set performance at high temperature, the fluororubber preferably has a glass transition temperature of -70°C or higher, more preferably -60°C or higher, still more preferably -50°C or higher. For good cold resistance, the glass transition temperature is preferably 5°C or lower, more preferably 0°C or lower, still more preferably -3°C or lower.

The glass transition temperature can be determined as follows. Specifically, using a differential scanning calorimeter (DSC822e, Mettler-Toledo International Inc.), 10 mg of a sample is heated at a rate of 10°C/min to give a DSC curve, and the temperature is read at the intermediate point of two intersections between each of the extension lines of the base lines before and after the secondary transition of the DSC curve and the tangent line at the inflection point of the DSC curve.

For good heat resistance, the fluororubber preferably has a Mooney viscosity ML(1+20) of 30 or higher, more preferably 40 or higher, still more preferably 50 or higher, at 170°C. For good processability, this Mooney viscosity is preferably 150 or lower, more preferably 120 or lower, still more preferably 110 or lower.

For good heat resistance, the fluororubber preferably has a Mooney viscosity ML(1+20) of 30 or higher, more preferably 40 or higher, still more preferably 50 or higher, at 140°C. For good processability, this Mooney viscosity is preferably 180 or lower, more preferably 150 or lower, still more preferably 110 or lower.

For good heat resistance, the fluororubber preferably has a Mooney viscosity ML(1+10) of 10 or higher, more preferably 20 or higher, still more preferably 30 or higher, at 100°C. For good processability, this Mooney viscosity is preferably 120 or lower, more preferably 100 or lower, still more preferably 80 or lower.

The fluororubber may be obtained using a chain transfer agent in the polymerization. The chain transfer agent may be a bromine compound or an iodine compound. One example of a polymerization method using a bromine compound or an iodine compound is emulsion polymerization in an aqueous medium under pressure in the presence of a bromine compound or an iodine compound and substantially in the absence of oxygen (iodine transfer polymerization). Representative examples of the bromine compound or iodine compound to be used include compounds represented by the formula:

R⁸IₓBr_{y}

(wherein x and y are each an integer of 0 to 2, and satisfy 1 ≤ x + y ≤ 2; R⁸ is a C1-C16 saturated or unsaturated fluorohydrocarbon or chlorofluorohydrocarbon group or a C1-C3 hydrocarbon group, each of which may optionally contain an oxygen atom). When a bromine compound or an iodine compound is used, iodine or bromine is introduced into the polymer and serves as a cross-linking point.

Examples of the iodine compound include 1,3-diiodoperfluoropropane, 2-iodoperfluoropropane, 1,3-diiodo-2-chloroperfluoropropane, 1,4-diiodoperfluorobutane, 1,5-diiodo-2,4-dichloroperfluoropentane, 1,6-diiodoperfluorohexane, 1,8-diiodoperfluorooctane, 1,12-diiodoperfluorododecane, 1,16-diiodoperfluorohexadecane, diiodomethane, 1,2-diiodoethane, 1,3-diiodo-n-propane, CF₂Br₂, BrCF₂CF₂Br, CF₃CFBrCF₂Br, CFClBr₂, BrCF₂CFClBr, CFBrClCFClBr, BrCF₂CF₂CF₂Br, BrCF₂CFBrOCF₃, 1-bromo-2-iodoperfluoroethane, 1-bromo-3-iodoperfluoropropane, 1-bromo-4-iodoperfluorobutane, 2-bromo-3-iodoperfluorobutane, 3-bromo-4-iodoperfluorobutene-1, 2-bromo-4-iodoperfluorobutene-1, monoiodomonobromo-substituted benzene, diiodomonobromo-substituted benzene, and (2-iodoethyl)- and (2-bromoethyl)-substituted benzene. Each of these compounds may be used alone or in any combination.

For polymerization reactivity, cross-linking reactivity, easy availability, and other properties, 1,4-diiodoperfluorobutane, 1,6-diiodoperfluorohexane, or 2-iodoperfluoropropane is preferably used.

Examples of the fluororubber include peroxide cross-linkable fluororubbers, polyol cross-linkable fluororubbers, and polyamine cross-linkable fluororubbers.

The peroxide cross-linkable fluororubbers may be, but are not limited to, any fluororubber having a peroxide cross-linkable moiety. Examples of the peroxide cross-linkable moiety include, but are not limited to, an iodine atom and a bromine atom.

The polyol cross-linkable fluororubbers may be, but are not limited to, any fluororubber having a polyol cross-linkable moiety. Examples of the polyol cross-linkable moiety include, but are not limited to, a moiety having a vinylidene fluoride (VdF) unit. The cross-linkable moiety may be introduced by, for example, copolymerizing a monomer that provides a cross-linkable moiety in the polymerization of the fluororubber.

The fluororubber is preferably a peroxide cross-linkable fluororubber because it can provide a molded article having excellent sticking resistance and is less likely to be colored even at high molding temperatures.

In particular, examples of the fluororubber include vinylidene fluoride (VdF)/hexafluoropropylene (HFP)-based fluororubbers, VdF/HFP/tetrafluoroethylene (TFE)-based fluororubbers, TFE/propylene-based fluororubbers, TFE/propylene/VdF-based fluororubbers, ethylene/HFP-based fluororubbers, ethylene/HFP/VdF-based fluororubbers, ethylene/HFP/TFE-based fluororubbers, VdF/TFE/perfluoro alkyl vinyl ether (PAVE)-based fluororubbers, and VdF/CTFE-based fluororubbers. Among these, the fluororubber is preferably at least one selected from the group consisting of vinylidene fluoride (VdF)/hexafluoropropylene (HFP)-based fluororubbers, VdF/HFP/tetrafluoroethylene (TFE)-based fluororubbers, and VdF/TFE/perfluoro alkyl vinyl ether (PAVE)-based fluororubbers.

The fluororubber has no perfluoropolyether structure. Further, the fluororubber contains no silicon atom.

The fluororubber preferably has a fluorine content of 64 mass% or more, more preferably 68 mass% or more, still more preferably 70 mass% or more. The upper limit thereof may be 85 mass%.

The fluororubber preferably has an iodine content of 0.001 to 10 mass%, more preferably 0.01 mass% or more, still more preferably 0.1 mass% or more. The iodine content is more preferably 5 mass% or less.

The silicone rubber is preferably a polyorganosiloxane having multiple polymerizable unsaturated bonds in one molecule. The polyorganosiloxane forms a backbone of the silicone rubber.

In order to cause curing by cross-linking reactions, the silicone rubber is preferably a polyorganosiloxane having multiple polymerizable unsaturated bonds in one molecule. In the polyorganosiloxane, each group containing a polymerizable unsaturated bond is preferably bonded to a silicon atom of the polyorganosiloxane. Each group bonded to a silicon atom and different from a group containing a polymerizable unsaturated bond may be an organic group or a hydrogen atom. Any known polyorganosiloxane may appropriately be used as the polyorganosiloxane. The number of the polymerizable unsaturated bonds in the polyorganosiloxane has only to be 2 or greater and may be 2 or 3 or greater.

The polyorganosiloxane is preferably one having unsaturated bonds between carbon atoms, double bonds, or alkenyl groups, as the polymerizable unsaturated bond.

Examples of the alkenyl group include an ethenyl group (vinyl group), a 2-propenyl group (allyl group), and a 1-propenyl group. The multiple alkenyl groups in the polyorganosiloxane may be all the same as each other, may be all different from each other, or may be partially different from each other.

Each alkenyl group is preferably bonded to any of the silicon atoms that form the backbone of the polyorganosiloxane.

Examples of the organic groups other than the alkenyl groups constituting the polyorganosiloxane include an optionally substituted alkyl group and an optionally substituted aryl group.

The alkyl group may be any of linear, branched, and cyclic alkyl groups, and is preferably has 1 to 10 carbon atoms.

Preferred examples of the linear or branched alkyl group include C1-C10 alkyl groups such as methyl, ethyl, n-propyl, isopropyl, n-butyl, isobutyl, sec-butyl, tert-butyl, n-pentyl, isopentyl, neopentyl, tert-pentyl, 1-methylbutyl, n-hexyl, 2-methylpentyl, 3-methylpentyl, 2,2-dimethylbutyl, 2,3-dimethylbutyl, n-heptyl, 2-methylhexyl, 3-methylhexyl, 2,2-dimethylpentyl, 2,3-dimethylpentyl, 2,4-dimethylpentyl, 3,3-dimethylpentyl, 3-ethylpentyl, 2,2,3-trimethylbutyl, n-octyl, isooctyl, nonyl, and decyl groups.

The cyclic alkyl group may be any of monocyclic and polycyclic alkyl groups. Preferred examples thereof include C3-C10 cyclic alkyl groups such as cyclopropyl, cyclobutyl, cyclopentyl, cyclohexyl, cycloheptyl, cyclooctyl, cyclononyl, cyclodecyl, norbornyl, isobornyl, 1-adamantyl, 2-adamantyl, and tricyclodecyl groups.

The aryl group may be any of monocyclic and polycyclic aryl groups. Preferred examples thereof include C6-C15 aryl groups such as a phenyl group, an o-tolyl group (2-methylphenyl group), a m-tolyl group (3-methylphenyl group), a p-tolyl group (4-methylphenyl group), a 1-naphthyl group, and a 2-naphthyl group.

The alkyl group and the aryl group each may optionally have a substituent. Here, the phrase "the alkyl group (aryl group) has a substituent" means that one or more hydrogen atoms of the alkyl group (aryl group) have been replaced by a group (s) other than a hydrogen atom or means that one or more carbon atoms of the alkyl group (aryl group) have been replaced by a group (s) other than a carbon atom. Both a hydrogen atom and a carbon atom may optionally be replaced by substituents.

The number of carbon atoms (including the carbon atoms of a substituent) of each of the substituted alkyl group and the substituted aryl group preferably falls within the above corresponding range.

Examples of the substituent for a hydrogen atom of the alkyl group or the aryl group include alkyl, alkyloxycarbonyl, alkylcarbonyloxy, alkoxy, alkylcarbonyl, alkenyl, alkenyloxy, aryl, alkylaryl, arylalkyl, aryloxy, arylalkyloxy, alkylaryloxy, hydroxy (-OH), cyano (-CN) groups, and a halogen atom.

Examples of the alkyl group as a substituent for a hydrogen atom include the alkyl groups listed as the organic group.

Examples of the alkyloxycarbonyl group as a substituent for a hydrogen atom include monovalent groups in each of which an alkyl group listed as the organic group is bonded to an oxycarbonyl group.

Examples of the alkylcarbonyloxy group as a substituent for a hydrogen atom include monovalent groups in each of which an alkyl group listed as the organic group is bonded to a carbonyloxy group.

Examples of the alkoxy group as a substituent for a hydrogen atom include monovalent groups in each of which an alkyl group listed as the organic group is bonded to an oxygen atom.

Examples of the alkylcarbonyl group as a substituent for a hydrogen atom include monovalent groups in each of which an alkyl group as the organic group is bonded to a carbonyl group.

Examples of the alkenyl group as a substituent for a hydrogen atom include alkenyl groups which are prepared by replacing one single bond (C-C) between carbon atoms of an alkyl group listed as the organic group by a double bond (C=C) and which do not correspond to the above polymerizable unsaturated bond-containing alkenyl groups. The double bond between carbon atoms may be located at any position of the alkenyl group as a substituent for a hydrogen atom.

Examples of the alkenyloxy group as a substituent for a hydrogen atom include monovalent groups in each of which the alkenyl group as a substituent is bonded to an oxygen atom.

Examples of the aryl group as a substituent for a hydrogen atom include the aryl groups listed as the organic group.

Examples of the alkylaryl group as a substituent for a hydrogen atom include groups in each of which one hydrogen atom bonded to a carbon atom of the aromatic ring of an aryl group listed as the organic group is replaced by an alkyl group listed as the organic group.

Examples of the arylalkyl group as a substituent for a hydrogen atom include groups in each of which one hydrogen atom of an alkyl group listed as the organic group is replaced by an aryl group listed as the organic group.

Examples of the aryloxy group as a substituent for a hydrogen atom include monovalent groups in each of which an aryl group listed as the organic group is bonded to an oxygen atom.

Examples of the arylalkyloxy group as a substituent for a hydrogen atom include monovalent groups in each of which an aryl group listed as the organic group and an oxygen atom are bonded to an alkylene group prepared by removing one hydrogen atom from an alkyl group listed as the organic group.

Examples of the alkylaryloxy group as a substituent for a hydrogen atom include monovalent groups in each of which an alkyl group listed as the organic group and an oxygen atom are bonded to an arylene group prepared by removing one hydrogen atom bonded to a carbon atom of the aromatic ring from an aryl group listed as the organic group.

Examples of the halogen atom as a substituent for a hydrogen atom include fluorine, chlorine, bromine, and iodine atoms.

The number of substituents for the hydrogen atoms is not limited. One hydrogen atom may be replaced by a substituent, multiple hydrogen atoms may be replaced by substituents, or all the hydrogen atoms may be replaced by substituents.

The hydrogen atom to be replaced by a substituent may be at any position.

The carbon atoms of the alkyl group and the aryl group may be replaced by any of the following substituents such as a carbonyl group (-C(=O)-), an ester bond (-C(=O)-O-), an amide bond (-NH-C(=O)-), and a heteroatom.

Examples of the heteroatom as a substituent for a carbon atom include oxygen, nitrogen, sulfur, and boron atoms.

The number of substituents for a carbon atom is not limited. One carbon atom may be replaced by a substituent, or multiple carbon atoms may be replaced by substituents. The carbon atom to be replaced by a substituent may be at any position.

The polyorganosiloxane to be used may be a commercial product or may be synthesized by a known method. One polyorganosiloxane may be used alone, or two or more polyorganosiloxanes may be used in combination. When two or more polyorganosiloxanes are used in combination, the components to be combined and the ratio of these may be appropriately selected depending on the purpose.

The following describes examples of commercial products (trade name) of the polyorganosiloxane and commercial products (trade name) containing the polyorganosiloxane.
- Products of Wacker Asahikasei Silicone Co., Ltd.:
   ELASTOSIL EL 1000 series, ELASTOSIL EL 4000 series, ELASTOSIL EL 3000 series, ELASTOSIL EL 7000 series, ELASTOSIL R401 series, and the like
- Products of Dow Corning Toray Co., Ltd.:
   SH800 series, SH50 series, SH70 series, SH700 series, SE4000 series, SE1000 series, SH500 series, SE6000 series, SH80 series, SRX400 series, DY32-400 series, DY32-500 series, DY32-1000 series, DY32-7000 series, DY32-4000 series, and the like
- Rubber compounds of Shin-Etsu Chemical Co., Ltd., Shin-Etsu Silicone:
   KE-600 series, KE-900 series, KE-9000 series, KE-700 series, KE-800 series, KE-5590-U, and KE-500 series; KE-655-U, KE-675-U, KE-931-U, KE-941-U, KE-951-U, KE-961-U, KE-971-U, KE-981-U, KE-961T-U, KE-971T-U, KE-871C-U, KE-9410-U, KE-9510-U, KE-9610-U, KE-9710-U, KE-742-U, KE-752-U, KE-762-U, KE-772-U, KE-782-U, KE-850-U, KE-870-U, KE-880-U, KE-890-U, KE-9590-U, KE-5590-U, KE-552-U, KE-552DU, KE-582-U, KE-552B-U, KE-555-U, KE-575-U, KE-541-U, KE-551-U, KE-561-U, KE-571-U, KE-581-U, KE-520-U, KE-530B-2-U, KE-540B-2-U, KE-1551-U, KE-1571-U, KE-153-U, KE-174-U, KE-3601SB-U, KE-3711-U, KE-3801M-U, KE-5612G-U, KE-5620BLU, KE-5620W-U, KE-5634-U, KE-7511-U, KE-7611-U, KE-7711-U, KE-765-U, KE-785-U, KE-7008-U, KE-7005-U, KE-503-U, KE-5042-U, KE-505-U, KE-6801-U, KE-136Y-U, X-30-4084-U, X-30-3888-U, X-30-4079-U, and the like

Examples of the silicone rubber include polyorganosiloxanes prepared by curing peroxide cross-linkable polyorganosiloxanes using a platinum compound as a catalyst by an addition reaction. In order to apply the same cross-linking system as that of the fluororubber, peroxide cross-linkable polyorganosiloxanes are preferred.

The silicone rubber has no perfluoropolyether structure. High consistency silicone rubbers are better as the silicone rubber than liquid silicone rubbers.

The perfluoropolyether has a perfluoropolyether structure.

Examples of the perfluoropolyether include compounds represented by the formula (I):

R¹-(OC₄F₈)ᵣ-(OC₃F₆)ₐ-(OC₂F₄)_{b}-(OCF₂)_{c}-R² (I).

In the formula, R¹ represents a C1-C16 alkyl group optionally substituted by one or more fluorine atoms, preferably a C1-C3 alkyl group optionally substituted by one or more fluorine atoms. The alkyl group optionally substituted by one or more fluorine atoms is preferably a fluoroalkyl group in which the terminal carbon atom is in the form of CF₂H- and the other carbon atoms are all substituted by fluorine atoms or a perfluoroalkyl group, more preferably a perfluoroalkyl group.

R² represents a hydrogen atom, a fluorine atom, or a C1-C16 alkyl group optionally substituted by one or more fluorine atoms, preferably a C1-C3 alkyl group optionally substituted by one or more fluorine atoms. The alkyl group optionally substituted by one or more fluorine atoms is preferably a fluoroalkyl group in which the terminal carbon atom is in the form of CF₂H- and other carbon atoms are all replaced with fluorine atoms or a perfluoroalkyl group, more preferably a perfluoroalkyl group.

The subscripts a, b, c, and r represent the respective numbers of the repeating units of four perfluoropolyethers constituting the backbone of the polymer, and are each independently an integer of 0 or greater and 300 or less. The sum of a, b, c, and r is at least 1, preferably 1 to 100. The repeating units in parentheses marked with a, b, c, and r may be present in any order in the formula. Among these repeating units, -(OC₄F₈)- may be any of -(OCF₂CF₂CF₂CF₂)-, -(OCF(CF₃)CF₂CF₂)-, -(OCF₂CF(CF₃)CF₂)-, -(OCF₂CF₂CF(CF₃))-, -(OC(CF₃)₂CF₂)-, -(OCF₂C(CF₃)₂)-, -(OCF(CF₃)CF(CF₃))-, -(OCF(C₂F₅)CF₂)-, and -(OCF₂CF(C₂F₅))-, and is preferably -(OCF₂CF₂CF₂CF₂)-; -(OC₃F₆)- may be any of -(OCF₂CF₂CF₂)-, -(OCF(CF₃)CF₂)-, and -(OCF₂CF(CF₃))-, and is preferably -(OCF₂CF₂CF₂)-; and -(OC₂F₄)- may be -(OCF₂CF₂)- or -(OCF(CF₃))-, and is preferably -(OCF₂CF₂)-.

Examples of commercially available perfluoropolyethers include DEMNUM (trade name, Daikin Industries, Ltd.), Fomblin (Solvay Specialty Polymers Japan K.K.), BARRIERTA (NOK Klueber), and Krytox (DuPont).

The perfluoropolyether preferably has an average molecular weight of 1000 to 30000.

The fluororubber composition preferably further contains a cross-linker.

The amount of the cross-linker is preferably 0.3 to 10 parts by mass, more preferably 0.4 to 5 parts by mass, still more preferably 0.4 to 3 parts by mass, relative to 100 parts by mass of the fluororubber. If the amount of the cross-linker is less than 0.3 parts by mass, the degree of the cross-linkage is insufficient, which tends to impair the properties of a molded article. If the amount of the cross-linker is more than 10 parts by mass, the cross-link density tend to be so high that the cross-linking time may be long, and such an amount tends to be unfavorable in terms of economic efficiency.

The cross-linker may be any cross-linker usually used for polyamine cross-linking, polyol cross-linking, or peroxide cross-linking. The cross-linker is preferably at least one selected from the group consisting of polyamine compounds, polyhydroxy compounds, and organic peroxides.

Examples of the polyamine compounds include hexamethylenediamine carbamate, N,N'-dicinnamylidene-1,6-hexamethylenediamine, and 4,4'-bis(aminocyclohexyl)methane carbamate. Preferred among these is N,N'-dicinnamylidene-1,6-hexamethylenediamine.

For excellent heat resistance, polyhydroxy aromatic compounds are suitably used as the polyhydroxy compounds.

Examples of the polyhydroxy aromatic compound include, but are not limited to, 2,2-bis(4-hydroxyphenyl)propane (hereinafter referred to as bisphenol A), 2,2-bis(4-hydroxyphenyl)perfluoropropane (hereinafter referred to as bisphenol AF), resorcin, 1,3-dihydroxybenzene, 1,7-dihydroxynaphthalene, 2,7-dihydroxynaphthalene, 1,6-dihydroxynaphthalene, 4,4'-dihydroxydiphenyl, 4,4'-dihydroxystilbene, 2,6-dihydroxyanthracene, hydroquinone, catechol, 2,2-bis(4-hydroxyphenyl)butane (hereinafter referred to as bisphenol B), 4,4-bis(4-hydroxyphenyl)valeric acid, 2,2-bis(4-hydroxyphenyl)tetrafluorodichloropropane, 4,4'-dihydroxydiphenylsulfone, 4,4'-dihydroxydiphenyl ketone, tri(4-hydroxyphenyl)methane, 3,3',5,5'-tetrachlorobisphenol A, and 3,3',5,5'-tetrabromobisphenol A. These polyhydroxy aromatic compounds may be in the form of alkali metal salts, alkaline earth metal salts, and the like. However, in cases where an acid is used to coagulate a copolymer, it is preferable not to use these metal salts.

When the cross-linker is any of the polyhydroxy compounds, the fluororubber composition preferably contains a cross-linking accelerator. The cross-linking accelerator promotes generation of double bonds in molecules in dehydrofluorination reaction of the main chain of the fluororubber and addition of the polyhydroxy compounds to the generated double bonds.

Examples of the cross-linking accelerator include onium compounds. Preferred among the onium compounds is at least one selected from the group consisting of ammonium compounds such as quaternary ammonium salts, phosphonium compounds such as quaternary phosphonium salts, oxonium compounds, sulfonium compounds, cyclic amines, and monofunctional amine compounds. More preferred is at least one selected from the group consisting of quaternary ammonium salts and quaternary phosphonium salts.

Examples of the quaternary ammonium salts include, but are not limited to, 8-methyl-1,8-diazabicyclo[5.4.0]-7-undecenium chloride, 8-methyl-1,8-diazabicyclo[5.4.0]-7-undecenium iodide, 8-methyl-1,8-diazabicyclo[5.4.0]-7-undecenium hydroxide, 8-methyl-1,8-diazabicyclo[5.4.0]-7-undecenium methylsulfate, 8-ethyl-1,8-diazabicyclo[5.4.0]-7-undecenium bromide, 8-propyl-1,8-diazabicyclo[5.4.0]-7-undecenium bromide, 8-dodecyl-1,8-diazabicyclo[5.4.0]-7-undecenium chloride, 8-dodecyl-1,8-diazabicyclo[5.4.0]-7-undecenium hydroxide, 8-eicosyl-1,8-diazabicyclo[5.4.0]-7-undecenium chloride, 8-tetracosyl-1,8-diazabicyclo[5.4.0]-7-undecenium chloride, 8-benzyl-1,8-diazabicyclo[5.4.0]-7-undecenium chloride (hereinafter referred to as DBU-B), 8-benzyl-1,8-diazabicyclo[5.4.0]-7-undecenium hydroxide, 8-phenethyl-1,8-diazabicyclo[5.4.0]-7-undecenium chloride, and 8-(3-phenylpropyl)-1,8-diazabicyclo[5.4.0]-7-undecenium chloride. Preferred among these is DBU-B for good cross-linkability and good physical properties of a fluororubber molded article.

Examples of the quaternary phosphonium salts include, but are not limited to, tetrabutylphosphonium chloride, benzyltriphenylphosphonium chloride (hereinafter referred to as BTPPC), benzyltrimethylphosphonium chloride, benzyltributylphosphonium chloride, tributylallylphosphonium chloride, tributyl-2-methoxypropylphosphonium chloride, and benzylphenyl(dimethylamino)phosphonium chloride. Preferred among these is benzyltriphenylphosphonium chloride (BTPPC) for good cross-linkability and good physical properties of a fluororubber molded article.

The cross-linking accelerator may be a quaternary ammonium salt, a solid solution of a quaternary phosphonium salt and bisphenol AF, or a chlorine-free cross-linking accelerator disclosed in JP H11-147891 A.

The amount of the cross-linking accelerator is preferably 0.1 to 5 parts by mass, more preferably 0.15 to 3 parts by mass, relative to 100 parts by mass of the fluororubber. If the amount of the cross-linking accelerator is less than 0.1 parts by mass, the fluororubber tends not to sufficiently cross-link, resulting in low heat resistance and oil resistance of the fluororubber molded article to be obtained. If the amount of the cross-linking accelerator is more than 5 parts by mass, the fluororubber composition tends to have low molding processability.

The organic peroxides have only to be any organic peroxides that can easily generate radicals under heat and/or in a redox system. Examples thereof include 1,1-bis(t-butylperoxy)-3,5,5-trimethylcyclohexane, 2,5-dimethylhexane-2,5-dihydroperoxide, di-t-butyl peroxide, t-butyl cumyl peroxide, dicumyl peroxide, α,α-bis(t-butylperoxy)-p-diisopropylbenzene, 2,5-dimethyl-2,5-di(t-butylperoxy)hexane, 2,5-dimethyl-2,5-di(t-butylperoxy)-hexyne-3, benzoyl peroxide, t-butylperoxybenzene, t-butylperoxymaleic acid, t-butylperoxy isopropyl carbonate, and t-butylperoxybenzoate. Preferred among these are 2,5-dimethyl-2,5-di(t-butylperoxy) hexane and 2,5-dimethyl-2,5-di(t-butylperoxy)-hexyne-3.

When the cross-linker is any of the organic peroxides, the fluororubber composition preferably contains a cross-linking aid. Examples of the cross-linking aid include triallyl cyanurate, trimethallyl isocyanurate, triallyl isocyanurate (TAIC), triacrylformal, triallyl trimellitate, N,N'-m-phenylene bismaleimide, dipropargyl terephthalate, diallyl phthalate, tetraallyl terephthalate amide, triallyl phosphate, bismaleimide, fluorinated triallyl isocyanurate (1,3,5-tris(2,3,3-trifluoro-2-propenyl)-1,3,5-triazine-2,4, 6-trione), tris(diallylamine)-S-triazine, triallyl phosphite, N,N-diallylacrylamide, 1,6-divinyldodecafluorohexane, hexaallylphosphoramide, N,N,N',N'-tetraallylphthalamide, N,N,N',N'-tetraallylmaronamide, trivinyl isocyanurate, 2,4,6-trivinyl methyltrisiloxane, tri(5-norbornene-2-methylene)cyanurate, and triallyl phosphite. Preferred among these is triallyl isocyanurate (TAIC) for good cross-linkability and good physical properties of a fluororubber molded article.

The amount of the cross-linking aid is preferably 0.1 to 10 parts by mass, more preferably 0.3 to 7 parts by mass, relative to 100 parts by mass of the fluororubber. If the amount of the cross-linking aid is less than 0.1 parts by mass, the fluororubber molded article tends to have a low compression set. If the amount of the cross-linking aid is more than 10 parts by mass, the fluororubber molded article tends to have a remarkably low elongation.

When the cross-linker is any of the polyamine compounds and the polyhydroxy compounds, the fluororubber composition preferably contains an acid acceptor. Examples of the acid acceptor include metal oxides such as magnesium oxide, calcium oxide, bismuth oxide, and zinc oxide; metal hydroxides such as calcium hydroxide; synthetic hydrotalcites; and sodium metasilicate.

The amount of the acid acceptor is preferably 0.5 to 30 parts by mass, more preferably 1 to 15 parts by mass, relative to 100 parts by mass of the fluororubber. If the amount of the acid acceptor is less than 0.5 parts by mass, the cross-linking time tends to be impractically long. If the amount of the acid acceptor is more than 30 parts by mass, the fluororubber molded article tends to have a low compression set.

When the cross-linker is any of the organic peroxides, the fluororubber composition may contain an acid acceptor to the extent that the acid acceptor does not affect the effects of the invention.

In particular, the cross-linker is preferably a peroxide cross-linker, more preferably an organic peroxide. The peroxide cross-linker is preferably one easily generating peroxy radicals under heat and/or in a redox system. Examples thereof include 1,1-bis(t-butylperoxy)-3,5,5-trimethylcyclohexane, 2,5-dimethylhexane-2,5-dihydroxyperoxide, di-t-butyl peroxide, t-butyl cumyl peroxide, dicumyl peroxide, α,α'-bis(t-butylperoxy)-p-diisopropylbenzene, 2,5-dimethyl-2,5-di(t-butylperoxy)hexane, 2,5-dimethyl-2,5-di(t-butylperoxy)hexyne-3, benzoyl peroxide, t-butylperoxybenzene, 2,5-dimethyl-2,5-di(benzoylperoxy)hexane, t-butylperoxymaleic acid, and t-butylperoxyisopropyl carbonate. Preferred among these are dialkyl compounds. The type and amount of the cross-linker to be added are determined depending on factors such as the amount of activated -O-O- and the decomposition temperature.

The fluororubber composition preferably particularly contains a cross-linking aid. The cross-linking aid may be a cross-linking aid usually used to cross-link rubbers. Preferred cross-linking aids to be used in combination with the above-described peroxide cross-linker are triallyl isocyanurate (TAIC) and trimethallyl isocyanurate.

The fluororubber composition preferably further contains a filler.

Examples of the filler include metal oxides such as titanium oxide, aluminum oxide, and zinc oxide; metal hydroxides such as magnesium hydroxide and aluminum hydroxide; carbonates such as magnesium carbonate, aluminum carbonate, calcium carbonate, and barium carbonate; silicates such as magnesium silicate, calcium silicate, and aluminum silicate; sulfates such as aluminum sulfate, calcium sulfate, and barium sulfate; metal sulfides such as molybdenum disulfide, iron sulfide, and copper sulfide; and diatomaceous earth, asbestos, lithopone (zinc sulfide/barium sulfide), graphite, carbon black, carbon fluoride, calcium fluoride, coke, quartz fine powder, zinc oxide, talc, mica powder, wollastonite, carbon fiber, aramid fiber, various whiskers, glass fiber, organic reinforcing agents, organic fillers, polytetrafluoroethylene, fluorine-containing thermoplastic resin, mica, silica, cerite, and clay.

The fluororubber composition preferably contains carbon black, silica, titanium oxide, zinc oxide, barium sulfate, calcium carbonate, magnesium silicate, quartz fine powder, talc, mica powder, wollastonite, mica, cerite, clay, or diatomaceous earth as the filler. Examples of the silica include fumed silica, precipitated silica, and fused silica.

The fluororubber composition may contain any of processing aids such as a release agent and a plasticizer and pigments such as an organic pigment and an inorganic pigment to the extent that they do not affect the effects of the invention.

The fluororubber composition may be produced using a common rubber kneader. Examples the rubber kneader include, but are not limited to, a roll, a kneader, a Banbury mixer, an internal mixer, and a twin-screw extruder.

The invention also relates to a molded article formed from the fluororubber composition.

The molded article can be formed by molding and cross-linking the fluororubber composition. The fluororubber composition can be molded by a conventionally known method. The molding and the cross-linking have only to be performed by the methods under the conditions within the range of the methods and the conditions known in the molding and cross-linking. The molding and cross-linking may be performed in any order. It may be possible to perform molding first and then perform cross-linking, or first cross-linking and then molding. It may also be possible to simultaneously perform molding and cross-linking.

Examples of the molding method include, but are not limited to, pressure molding and injection molding using a metal mold. The cross-linking method employed may be steam cross-linking, a common method in which a cross-linking reaction is induced by heating, or irradiation cross-linking. Preferred among these is a cross-linking reaction induced by heating. The non-limited specific conditions for cross-linking may usually be appropriately determined within the temperature range of 140°C to 250°C and the cross-linking time range of 1 minute to 24 hours depending on the type of a cross-linker to be used.

Specific applications of the molded article of the invention include, but are not limited to, the following molded articles.

### Sealants:

Examples of the molded article in the field relating to semiconductors, such as semiconductor manufacturing apparatus, liquid crystal panel manufacturing apparatus, plasma panel manufacturing apparatus, plasma addressed liquid crystal panels, field emission display panels, and solar cell substrates include O(square)-rings, packings, gaskets, diaphragms, and other various sealants. These can be used for CVD devices, dry etching devices, wet etching devices, oxidation and diffusion devices, spattering devices, ashing devices, washing devices, ion implantation devices, and exhaust devices. Specifically, these can be used as O-rings for gate valves, O-rings for quartz windows, O-rings for chambers, O-rings for gates, O-rings for bell jars, O-rings for couplings, O-rings and diaphragms for pumps, O-rings for semiconductor gas control devices, O-rings for resist developers and peeling liquids, and other various sealants.

In the field of automobiles, the molded article can be used as any of gaskets, shaft seals, valve stem seals, and other various sealants for engines and the peripheral devices thereof, and various sealants for automatic transmissions. Examples of the sealants for fuel systems and the peripheral devices thereof include O(square)-rings, packings, and diaphragms. Specifically, these can be used as engine head gaskets, metal gaskets, oil pan gaskets, crankshaft seals, camshaft seals, valve stem seals, manifold packings, seals for oxygen sensors, injector O-rings, injector packings, fuel pump O-rings, diaphragms, crankshaft seals, gear box seals, power piston packings, cylinder liner seals, valve stem seals, automatic transmission front pump seals, rear axle pinion seals, universal joint gaskets, speed meter pinion seals, foot brake piston cups, torque transmission O-rings, oil seals, exhaust gas recirculation system seals, bearing seals, and carburetor sensor diaphragms, for example.

Examples of the molded article in the field of aircraft, rockets, and ships include diaphragms, O(square) -rings, valves, packings, and other various sealants. These can be used in fuel systems. Specifically, in the field of aircraft, these are used as jet engine valve stem seals, gaskets and O-rings, rotating shaft seals, hydraulic gaskets, and fire wall seals, for example; and in the field of ships, these are used as sealants such as screw propeller shaft stern seals, diesel engine suction and exhaust valve stem seals, butterfly valve seals, and butterfly valve shaft seals, for example.

Examples of the molded article in the field of chemical plant include valves, packings, diaphragms, O(square)-rings, and other various sealants, and these can be used in production steps of chemicals such as medicinal chemicals, agrochemicals, paints, and resins. Specifically, these can be used as seals in chemical pumps, flowmeters, and piping systems, heat exchanger seals, glass cooler packings in sulfuric acid production plants, seals in agrochemical spreaders and agrochemical transfer pumps, gas piping seals, plating bath seals, high-temperature vacuum drier packings, papermaking belt roller seals, fuel cell seals, wind tunnel joint seals, tube joining part packings in gas chromatographs and pH meters, and seals, diaphragms, and valve parts in analytical apparatus and physical and chemical apparatus, for example.

In the fields of photography (e.g., developing machines), printing (e.g., printing machines) and painting (e.g., painting equipment), the molded article can be used as seals and valve parts in dry-process copying machines.

Also, the molded article can be used for rolls for the above fields.

Examples of the molded article in the field of food industry plant equipment include valves, packings, diaphragms, O(square)-rings, and other various sealants, and these can be used in food production steps. Specifically, these can be used as plate type heat exchanger seals and vending machine electromagnetic valve seals, for example.

Examples of the molded article in the field of nuclear power plant equipment include packings, O-rings, diaphragms, valves, and other various sealants.

Examples of the molded article in the field of general industry include packings, O-rings, diaphragms, valves, and other various sealants. Specifically, these are used as seals and bearing seals in hydraulic and lubricating systems, seals for windows and others in dry cleaning equipment, uranium hexafluoride enrichment apparatus seals, seal (vacuum) valves in cyclotrons, automatic packaging machine seals, diaphragms in pumps (in pollution-monitoring apparatus) for analyzing sulfurous acid gas and chlorine gas in the air, for example.

In the field of electric systems, the molded article is specifically used as bullet train (Shinkansen) insulating oil caps and liquid-sealed transformer benching seals, for example.

In the field of fuel cells, the molded article is specifically used as sealants between electrodes or between electrodes and a separator and seals in hydrogen, oxygen, or product water piping systems.

In the field of electronic components, the molded article is specifically used as radiator materials, electromagnetic wave shield materials, and computer hard disk drive gaskets.

Examples of the molded article which can be used in situ molding include, but are not limited to, engine oil pan gaskets, gaskets for magnetic recording apparatus, and clean room filter unit sealants.

### Sliding members:

Examples of sliding members in the field relating to automobiles include piston rings, shaft seals, valve stem seals, crankshaft seals, camshaft seals, and oil seals.

General examples thereof include fluororubber products used as parts that slide in contact with other materials.

### Non-adhesive members:

Examples of non-adhesive members in the field of computer include hard disk crash stoppers.

### Fields utilizing water repellency and oil repellency:

Examples of the application include automobile wiper blades and coated fabrics for outdoor tents.

The molded article of the invention may be used in the fields of automobiles (including two-wheel vehicles), sports, home electrical appliances, stationery, sundries, furniture, cloths, horticulture, and building materials.

The molded article of the invention can be particularly suitably used as protective covers for automobile seats, protective covers for bicycle saddles, protective covers for automotive interior components and furniture, watch belts, belts used to attach goods (other than watches) to the body, housings for portable electronic devices, or protective covers for portable electronic devices.

### EXAMPLES

The invention will be described below referring to, but are not limited to, examples.

The parameters in the examples were determined by the following methods.

### <Cross-linking properties>

A cross-linking curve of the fluororubber composition at 170°C was prepared using a rubber process analyzer (Type: RPA2000, Alpha Technologies) in the first cross-linking, and the lowest viscosity (ML), highest viscosity (MH), induction time (T10), and optimal cross-linking time (T90) were determined based on changes in torque.

### <Mechanical properties>

Each of the 2-mm-thick cross-linked sheets obtained in the examples and the comparative examples was measured for the 100% modulus at 23°C, tensile strength, and elongation at break using a tensile testing machine (Tensilon, Orientec Corporation) in accordance with JIS K 6251 (1993) under the conditions of 500 mm/min using a #5 dumbbell.

### <Hardness>

Each of the 2-mm thick cross-linked sheets obtained in the examples and the comparative examples was measured for hardness (Hs (SHORE A. peak value) and Hs (SHORE A. value after one second)) using a type A durometer (ASKER, Kobunshi Keiki Co., Ltd.) in accordance with JIS K 6253 (1997).

### <Preparation of sample for sticking test>

Samples for a sticking test, each with a thickness of 2 mm, a length of 100 mm, and a width of 10 mm, were prepared by press-vulcanizing (170°C × 10 minutes) and oven-vulcanizing (180°C × 4 hours) the fluororubber composition.

### <Sticking test>

Two samples were stacked, and a fluororesin film (a FEP film with a thickness of 150 µm) was inserted between the samples to reach 20 mm from the edges of the long sides so as to prevent sticking of the edge portions and to form a margin for separation. To the test piece of the two samples stacked was applied a pressure of 98 Pa. Then, the test piece was allowed to stand at 40°C for 24 hours. Thereafter, the pressure was released, and the test piece was allowed to stand at 23°C for 1 hour. Then, the test piece was subjected to a T-peel test at 23°C at a peel rate of 50 mm/min using a tensile testing machine (Tensilon, Orientec Corporation). Thus, the adhesion strength (maximum value) was measured.

A smaller value of the adhesion strength indicates less sticking and is favorable.

### <Fluorine content>

The fluorine content was calculated from the composition of the fluororubber determined by ¹⁹F-NMR measurement.

### <Iodine content>

A mixture of 12 mg of a fluororubber and 5 mg of Na₂SO₃ was prepared and combusted in a quartz flask in an oxygen atmosphere in the presence of an absorption liquid prepared by dissolving 30 mg of a combination of Na₂CO₃ and K₂CO₃ at 1:1 (weight ratio) in 20 ml of pure water. The mixture was allowed to stand for 30 minutes. Then, the iodine content was determined with an ion chromatograph 20A (Shimadzu Corp.). The calibration curve was obtained using a KI standard solution containing 0.5 ppm and 1.0 ppm of iodine ions.

The following describes the components shown in Table 1.

### Fluororubber compound

The fluororubber compound was prepared by blending 100 parts by mass of a peroxide cross-linkable VdF/HFP/TFE-based fluororubber (fluorine content: 70.5%, iodine content: 0.22 wt%) produced by iodine transfer polymerization with 3 parts by mass of fumed silica, 3 parts by mass of zinc oxide #1, 2.3 parts by mass of triallylisocyanurate, and 0.7 parts by mass of 2,5-dimethyl-2,5-di(t-butylperoxy)hexane.

### Silicone rubber compound

The silicone rubber compound was prepared by blending 100 parts by mass of ELASTOSIL R401/60 S (Wacker Asahikasei Silicone Co., Ltd.) with 0.6 parts by mass of 2,5-dimethyl-2,5-di(t-butylperoxy)hexane.

### Perfluoropolyether

### BARRIERTA J100 FLUID (NOK Klueber)

Barium sulfate and carbon black N330 were used as fillers .

### Examples 1 to 7, Comparative Examples 1 to 3

The components were blended according to the compositions shown in Table 1, and kneaded on an open roll mill. Thus, fluororubber compositions were prepared. The cross-linking properties of the resulting fluororubber compositions were shown in Table 1. Each fluororubber composition was press-cross-linked (170°C × 10 minutes), and then oven-cross-linked (180°C × 4 hours). Thus, cross-linked sheets were prepared. The evaluation results of the cross-linked sheets were shown in Table 1.

**[Table 1]**

| | | Example 1 | Example 2 | Example 3 | Example 4 | Example 5 | Example 6 | Example 7 | Comparative Example 1 | Comparative Example 2 | Comparative Example 3 |
|---|---|---|---|---|---|---|---|---|---|---|---|
| Composition | | | | | | | | | | | |
| Fluororubber compound | parts by mass | 109 | 109 | 109 | 109 | 109 | 109 | 109 | 109 | 109 | 109 |
| Silicone rubber compound | parts by mass | 10 | 20 | 40 | 40 | 20 | 20 | 50 | 20 | 20 | 100 |
| Perfluoropolyether | parts by mass | 3 | 3 | 3 | 5 | 5 | 1 | 3 | - | 0.2 | 3 |
| | | | | | | | | | | | |
| Barium sulfate | parts by mass | 20 | 20 | 20 | 20 | 20 | 20 | 20 | 20 | 20 | 20 |
| Carbon black (N330) | parts by mass | 3 | 3 | 3 | 3 | 3 | 3 | 3 | 3 | 3 | 3 |

| Cross-linking properties | | | | | | | | | | | |
|---|---|---|---|---|---|---|---|---|---|---|---|
| ML | dNm | 0.5 | 0.5 | 0.6 | 0.6 | 0.5 | 0.6 | 0.4 | 0.6 | 0.5 | 0.3 |
| MH | dNm | 28.5 | 27.7 | 24.3 | 23.9 | 27.0 | 27.8 | 22.7 | 29.0 | 24.5 | 20.6 |
| T10 | min | 0.9 | 1.0 | 1.0 | 1.0 | 1.0 | 1.0 | 1.1 | 1.0 | 1.0 | 1.1 |
| T90 | min | 3.7 | 3.7 | 4.1 | 3.7 | 3.6 | 3.6 | 3.5 | 3.3 | 2.5 | 3.3 |

| Physical properties of cross-linked sheet | | | | | | | | | | | |
|---|---|---|---|---|---|---|---|---|---|---|---|
| 100% modulus | MPa | 3.4 | 3.3 | 2.9 | 2.9 | 3.1 | 3.3 | 3.0 | 3.5 | 3.5 | 2.6 |
| Tensile strength | MPa | 14.5 | 13.0 | 10.6 | 10.4 | 11.9 | 12.8 | 9.5 | 12.6 | 11.0 | 7.2 |
| Elongation at break | % | 360 | 350 | 360 | 360 | 350 | 350 | 370 | 340 | 350 | 340 |
| Hardness (Shore A, peak value) | - | 74 | 73 | 71 | 71 | 72 | 73 | 70 | 75 | 75 | 67 |
| Hardness (Shore A. value after one second) | - | 72 | 70 | 69 | 69 | 70 | 70 | 68 | 72 | 72 | 64 |

| Sticking test | | | | | | | | | | | |
|---|---|---|---|---|---|---|---|---|---|---|---|
| Adhesion strength | N/mm | 0.21 | 0.22 | 0.24 | 0.28 | 0.18 | 0.27 | 0.35 | 0.61 | 0.57 | 0.62 |

## Claims

1. A fluororubber composition comprising:
a fluororubber;
a silicone rubber; and
perfluoropolyether,
the fluororubber composition containing the silicone rubber in an amount of 5 to 55 parts by mass relative to 100 parts by mass of the fluororubber and the perfluoropolyether in an amount of 0.5 to 10 parts by mass relative to 100 parts by mass of the fluororubber.

2. The fluororubber composition according to claim 1, further comprising a cross-linker.

3. The fluororubber composition according to claim 1 or 2, further comprising a filler.

4. A molded article formed from the fluororubber composition according to claim 1, 2, or 3.
